(19) **Europäisches Patentamt / European Patent Office / Office européen des brevets**

(11) **EP 2 829 472 B1**

(12) ## FASCICULE DE BREVET EUROPEEN

(45) Date de publication et mention de la délivrance du brevet:
**17.04.2019 Bulletin 2019/16**

(21) Numéro de dépôt: **14002384.7**

(22) Date de dépôt: **11.07.2014**

(51) Int Cl.:
*B64C 27/12* (2006.01)   *B64D 31/06* (2006.01)
*B64D 35/08* (2006.01)

(54) **Installation motrice trimoteur régulée pour un aéronef à voilure tournante**

Geregeltes dreimotoriges Triebwerk für ein Drehflügelflugzeug

Controlled three-engined aircraft powerplant for a rotary wing aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2013 FR 1301749**

(43) Date de publication de la demande:
**28.01.2015 Bulletin 2015/05**

(73) Titulaire: **Airbus Helicopters**
**13725 Marignane Cedex (FR)**

(72) Inventeurs:
• **Rossotto, Régis**
**13012 Marseille (FR)**
• **Boie, Hanno**
**13012 Marseille (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A- 3 174 551    US-A- 3 963 372**
**US-A- 4 522 025    US-A1- 2003 135 305**

Printed by Jouve, 75001 PARIS (FR)

EP 2 829 472 B1

**Description**

La présente invention se situe dans le domaine de la motorisation des aéronefs à voilure tournante comportant plusieurs moteurs, et plus particulièrement dans le domaine de la régulation d'une telle motorisation.

La présente invention concerne une installation motrice pour un aéronef à voilure tournante et un aéronef à voilure tournante muni de cette installation motrice ainsi qu'un procédé de régulation d'une telle installation motrice. Cette invention est particulièrement destinée à la régulation d'une installation motrice comportant trois moteurs.

Une installation motrice pour un aéronef à voilure tournante comprend généralement un ou deux moteurs et une boîte de transmission principale de puissance. Chaque moteur entraine mécaniquement la boîte de transmission principale de puissance afin de mettre en rotation au moins un arbre principal de sortie de la boîte de transmission principale de puissance. Cet arbre principal de sortie est solidaire en rotation avec un rotor principal de l'aéronef à voilure tournante afin d'assurer la sustentation, voire la propulsion de l'aéronef.

Cette boîte de transmission principale de puissance dispose généralement d'arbres secondaires de sortie pouvant par exemple entrainer en rotation un rotor arrière ou bien une ou deux hélices de propulsion par l'intermédiaire d'une boîte de transmission auxiliaire de puissance ainsi qu'un générateur d'énergie électrique et/ou des systèmes hydrauliques. Les fréquences respectives de rotation de ces arbres secondaires de sortie sont généralement différentes de la fréquence de rotation de l'arbre principal de sortie.

Il est à noter que l'on entend par moteur une unité motrice entrainant mécaniquement ladite boîte de transmission principale de puissance et, par suite, participant à la sustentation et/ou à la propulsion de l'aéronef à voilure tournante. De tels moteurs sont par exemple des turbomoteurs équipant les aéronefs à voilure tournante.

Par ailleurs, il est fréquent aujourd'hui d'utiliser sur les aéronefs à voilure tournante une installation motrice comportant deux moteurs, chaque moteur étant piloté par un calculateur dédié. Ces moteurs sont généralement des turbomoteurs identiques fonctionnant selon des règles de régulation.

Par exemple, il existe la régulation proportionnelle qui permet de réguler un système proportionnellement à un écart entre une valeur courante du système qui doit être régulée et une consigne. Une telle régulation est en général efficace. Par contre, la valeur de la consigne n'est jamais atteinte par une régulation proportionnelle, un écart entre la valeur courante et la consigne existant en permanence. On peut cependant se rapprocher de la consigne en diminuant cet écart, mais le système devient souvent dans ce cas instable.

Afin d'améliorer cette régulation, on peut introduire une correction supplémentaire qui permet de supprimer des erreurs de suivi de la consigne. Cette correction est proportionnelle à l'intégration de l'écart entre la valeur courante et la consigne dans le temps, c'est-à-dire proportionnelle à la somme de tous les écarts mesurés en permanence. On parle alors de régulation proportionnelle intégrale.

Il existe également la régulation proportionnelle intégrale dérivée qui comporte une correction supplémentaire, proportionnelle à la dérivée de cet écart. Cette correction permet de prendre en compte également les variations de cet écart, que ce soit en direction et/ou amplitude.

Des régulations proportionnelles intégrales sont fréquemment utilisées sur des aéronefs bimoteur permettant ainsi de maîtriser parfaitement la fréquence de rotation du rotor principal ainsi que les performances de l'aéronef. Le fonctionnement est alors équilibré entre les deux moteurs de l'installation motrice permettant notamment d'avoir une usure symétrique de ces moteurs ainsi qu'au niveau des liaisons mécaniques en entrée de la boite de transmission principale.

Par contre, de telles régulations proportionnelles intégrales nécessitent des connexions complexes entre les calculateurs des deux moteurs afin que chaque moteur délivre une puissance équivalente. De telles régulations proportionnelles intégrales nécessitent notamment l'utilisation d'une boucle d'équilibrage entre les deux calculateurs.

De plus, ces calculateurs doivent être relativement performants pour permettre une telle régulation. Par exemple, ces calculateurs sont de type « FADEC » selon l'acronyme de la désignation en langue anglaise «Full Authority Digital Engine Control». Ces calculateurs sont également souvent bi-canaux, c'est-à-dire que les liaisons entre les calculateurs ainsi qu'entre les calculateurs et les moteurs sont doublées afin de sécuriser ces liaisons et, par suite, le fonctionnement de l'installation motrice.

En outre, la taille des aéronefs à voilure tournante tendant à augmenter, le besoin de puissance au niveau de leur installation motrice augmente également. En conséquence, l'installation motrice de ces aéronefs est amenée à comporter au moins trois moteurs pour être capable de fournir une puissance suffisante.

Les aéronefs à voilure tournante trimoteur sont aujourd'hui principalement équipés de trois moteurs identiques permettant notamment d'assurer la réactivité de l'installation motrice en cas de panne d'un moteur ainsi que pour simplifier l'installation et l'intégration des moteurs.

On appelle « moteurs identiques » des moteurs ayant des caractéristiques d'entraînement identiques d'un organe rotatif.

A l'inverse, on appelle « moteurs inégaux » des moteurs ayant des caractéristiques d'entraînement distinctes, à savoir des moteurs générant des puissances maximales différentes et/ou des couples maximaux inégaux et/ou des fréquences de rotation maximales d'un arbre de sortie différentes. Ainsi, deux moteurs inégaux peuvent correspondre respectivement à un moteur entraînant un arbre de sortie à plusieurs dizaines de milliers de tours par minute et à un moteur entraînant un arbre de sortie à moins de dix mille tours par minute par exemple.

Pour une installation motrice comportant trois moteurs identiques, les régulations de ces trois moteurs identiques sont alors identiques, chaque moteur fournissant une puissance équivalente.

L'utilisation de telles régulations proportionnelles intégrales sur une telle installation motrice soulève cependant plusieurs problèmes. Tout d'abord, il faut utiliser des calculateurs performants tels que de type FADEC ainsi que des liaisons entre chaque calculateur de chaque moteur. L'architecture des liaisons entre les calculateurs est alors complexe, de même que les boucles de régulation. Cette architecture est nécessaire pour assurer une régulation de la fréquence de rotation du rotor principal à la fois réactive, stable et sans erreur statique. De fait, la boucle d'équilibrage entre ces calculateurs devient complexe et longue.

De plus, ces calculateurs pouvant être bi-canaux, la complexité des liaisons entre les calculateurs est grandement augmentée. La masse des faisceaux électriques permettant ces liaisons peut alors être importante et leur implantation dans l'aéronef peut également être complexe. Par suite, le coût de telles régulations des au moins trois moteurs de cette installation motrice peut devenir très important.

Il est également possible d'utiliser des régulations proportionnelles pour chaque moteur. L'architecture des liaisons entre les calculateurs est alors plus simple, tout en permettant d'avoir des moteurs équilibrés. Par contre, des erreurs statiques sur la fréquence de rotation du rotor principal de l'aéronef sont alors fréquentes et les performances de l'installation motrice et, par suite, de l'aéronef, ne sont pas parfaitement maitrisées ni optimisées.

Il est également possible d'utiliser des moteurs inégaux dans une installation motrice trimoteur afin par exemple de répondre aux exigences de sécurité ou bien de pallier le manque de puissance des moteurs disponibles sur le marché.

De fait, pour une installation motrice trimoteur comportant au moins deux moteurs inégaux, les régulations de ces moteurs peuvent s'avérer encore plus complexes, notamment au niveau de la répartition de la puissance de chaque moteur et de la régulation de la fréquence de rotation du rotor principal.

Parmi l'arrière plan technologique, on connaît le document US 4479619 qui propose un système de transmission de puissance pour des hélicoptères trimoteur. De même, l'hélicoptère Super-Frelon de la demanderesse possédait également trois moteurs identiques.

Le document US 3963372 propose une solution de gestion de la puissance et de contrôle des moteurs pour des hélicoptères trimoteur.

Par ailleurs, le document US2003/0135305 décrit un système d'anticipation du couple demandé au niveau du rotor principal d'un aéronef à voilure tournante afin d'éviter notamment une chute de la fréquence de rotation de ce rotor principal.

On connait également le document US3174551 qui décrit dispositif capable de contrôler et de corriger un déséquilibre entre les puissances fournies par deux turbomoteurs équipant un aéronef.

De plus, le document US4522025 décrit un système de gestion de la puissance et de la fréquence de rotation des turbomoteurs d'un aéronef à voilure tournante.

Pour pallier le problème des moteurs conçus de manière surdimensionnée, une installation des moteurs à puissances maximales inégales, dans le cas des aéronefs bimoteur, a déjà été envisagée par le passé. C'est le cas du document WO2012/059671A2 qui propose deux moteurs à puissances maximales inégales. Cependant, ce document WO2012/059671A2 traite seulement le cas des aéronefs bimoteur et ne présente pas de solutions aux problèmes de contrôle ou de stabilité.

La présente invention a alors pour objet de proposer une installation motrice trimoteur permettant de simplifier les architectures entre les calculateurs de chaque moteur sans pour autant compromettre la maitrise de la fréquence de rotation du rotor principal de l'aéronef et tout en optimisant la puissance fournie par chaque moteur.

La présente invention permet notamment d'avoir une régulation de la fréquence de rotation du rotor de l'aéronef à partir des régulations des moteurs qui peuvent être différentes.

Selon l'invention, une installation motrice comprend deux groupes moteurs et une boîte de transmission mécanique de puissance. Les deux groupes moteurs entrainent mécaniquement la boîte de transmission mécanique de puissance afin de mettre en rotation au moins un arbre principal de sortie de cette boîte de transmission mécanique de puissance, cet arbre principal de sortie ayant une fréquence de rotation $NR$.

Cette installation motrice est particulièrement destinée à équiper un aéronef à voilure tournante, la boîte de transmission mécanique de puissance entraînant notamment au moins un rotor principal de l'aéronef par l'intermédiaire de l'arbre principal de sortie de cette boîte de transmission mécanique de puissance.

Cette installation motrice est remarquable en ce qu'un premier groupe moteur comprend au moins un moteur principal et un premier dispositif de régulation. Ce premier dispositif de régulation permet de réguler le fonctionnement de chaque moteur principal selon une première consigne $NR^*$ de la fréquence de rotation $NR$ de l'arbre principal de sortie. Le second groupe moteur comprend au moins un moteur secondaire et un second dispositif de régulation. Ce second dispositif de régulation permet de réguler la puissance fournie par chaque moteur secondaire selon une seconde consigne $W_1^*$ de

puissance à fournir par ce second groupe moteur.

L'installation motrice comprend également un troisième dispositif de régulation permettant de réguler le fonctionnement de chaque moteur principal selon une troisième consigne $W_2f*$ d'anticipation de puissance à fournir par le premier groupe moteur. Cette troisième consigne $W_2f*$ d'anticipation de puissance est telle que le premier groupe moteur et le second groupe moteur fournissent conjointement une puissance $Ws*$ nécessaire au niveau de l'arbre principal de sortie

Cette troisième consigne $W_2f*$ ne permet pas de réguler directement la puissance fournie par le premier groupe moteur, celui-ci étant prioritairement régulé par la première consigne $NR*$ afin de maîtriser la fréquence de rotation $NR$ de l'arbre principal de sortie de l'installation motrice. Par contre, cette troisième consigne $W_2f*$ permet améliorer la réactivité de la régulation du premier groupe moteur, notamment en phase transitoire, en prenant en compte par anticipation le besoin de puissance de ce premier groupe moteur et, par suite, du besoin de puissance de l'installation motrice.

Ainsi, le premier groupe moteur est tout d'abord régulé afin de maîtriser parfaitement la fréquence de rotation $NR$ de l'arbre principal de sortie de cette installation motrice. Cette fréquence de rotation $NR$ de l'arbre principal de sortie est alors sensiblement égale à la première consigne $NR*$, mais peut tout de même varier légèrement autour de cette première consigne $NR*$ au cours de la régulation.

De plus, le premier dispositif de régulation comporte autant de calculateurs principaux que de moteurs principaux, chaque calculateur principal étant relié à un seul moteur principal, ces calculateurs principaux étant reliés entre eux afin de permettre la régulation des moteurs principaux. Le premier groupe moteur comporte généralement au moins deux moteurs qui peuvent être identiques ou bien différents, De préférence, le premier groupe moteur comporte deux moteurs identiques.

Le premier dispositif de régulation assure par exemple la régulation de chaque moteur principal selon une boucle de régulation proportionnelle intégrale.

Dans le cas particulier d'une application de l'installation motrice selon l'invention à un aéronef à voilure tournante, le premier dispositif de régulation permet, comme au sein d'une installation motrice traditionnelle d'un aéronef à voilure tournante, de maîtriser parfaitement la fréquence de rotation $NR$ du rotor principal qui est entraîné par l'arbre principal de sortie de cette installation motrice. Le premier dispositif de régulation assure alors la régulation de la fréquence de rotation de la turbine libre de chaque moteur principal, chaque moteur principal étant de préférence un turbomoteur géré par un calculateur principal de type FADEC.

Le second groupe moteur est quant à lui régulé par l'intermédiaire du second dispositif de régulation afin de fournir une puissance $W_1$. Par exemple, la puissance $W_1$ fournie par le second groupe moteur est sensiblement égale à la seconde consigne $W_1*$, mais peut tout de même varier légèrement autour de cette seconde consigne $W_1*$ au cours de la régulation.

De plus, le second dispositif de régulation comporte autant de calculateurs secondaires que de moteurs secondaires, chaque calculateur secondaire étant relié à un seul moteur secondaire, ces calculateurs secondaires étant reliés entre eux afin de permettre la régulation des moteurs secondaires. Le second groupe moteur comporte de préférence un seul moteur secondaire, qui peut être différent des moteurs principaux.

Le second dispositif de régulation assure par exemple la régulation de chaque moteur secondaire selon une boucle de régulation proportionnelle intégrale. Ce second dispositif de régulation assure par exemple cette régulation selon le document FR2974564.

Dans le cas particulier d'une application de l'installation motrice selon l'invention à un aéronef à voilure tournante, chaque moteur secondaire est un turbomoteur. Le second dispositif de régulation assure alors la régulation de la puissance de chaque moteur secondaire pour respecter la seconde consigne $W_1*$ par l'intermédiaire d'un calculateur secondaire pour chaque moteur secondaire, chaque calculateur pouvant être de type *FADEC*.

Le second dispositif de régulation peut également réguler le second groupe moteur à l'aide d'un Indicateur de Première Limite (IPL) dans le cas où l'installation motrice suivant l'invention équipe un aéronef à voilure tournante. La seconde consigne $W_1*$ de puissance à fournir par le second groupe moteur peut alors être fonction d'informations fournies par un Indicateur de Première Limite (IPL) des moteurs secondaires.

De préférence, le second dispositif de régulation comporte un moyen de protection contre une survitesse de l'arbre principal de sortie et contre une survitesse de chaque moteur secondaire. On entend par survitesse de l'arbre principal de sortie une fréquence excessive de rotation de cet arbre principal de sortie pouvant générer des dégradations notamment à la boîte de transmission mécanique de puissance de l'installation motrice selon l'invention ainsi qu'à l'aéronef dans le cas où cette installation motrice équipe un aéronef à voilure tournante. De même, on entend par survitesse d'un moteur secondaire une fréquence excessive de rotation de ce moteur secondaire pouvant générer des dégradations à ce moteur secondaire.

En effet, si la seconde consigne $W_1*$ est trop importante, la puissance $W_1$ fournie par le second groupe moteur peut être trop importante et générer alors une telle survitesse. Dans ce cas, la puissance $W_1$ fournie par le groupe moteur est selon la seconde consigne $W_1*$ multipliée par un coefficient $k$, ce coefficient $k$ étant supérieur à zéro et inférieur ou égale à l'unité.

Ce coefficient k est alors égal à l'unité quand aucune survitesse n'est détectée. La puissance $W_1$ réellement fournie par le second groupe moteur est alors sensiblement égale à la seconde consigne $W_1*$, mais peut tout de même varier légèrement autour de cette

seconde consigne $W_1^*$ au cours de la régulation.

Par contre, le coefficient $k$ est inférieur à l'unité et supérieur à zéro en cas de détection d'une telle survitesse. La puissance $W_1$ réellement fournie par le second groupe moteur est alors réduite et sensiblement égale à la valeur $k.W_1^*$, c'est à dire de manière que $W_1=k.W_1^*$, mais peut tout de même varier légèrement autour de cette valeur $k.W_1^*$ au cours de la régulation.

Enfin, le premier groupe moteur fournit une puissance $W_2$ afin de fournir avec le second groupe moteur une puissance $Ws^*$ nécessaire au niveau de l'arbre principal de sortie. Cette puissance $W_2$ fournie par le premier groupe moteur est alors sensiblement égale à la troisième consigne $W_2f^*$, mais peut tout de même varier légèrement autour de cette troisième consigne $W_2f^*$ au cours de la régulation.

La puissance $Ws^*$ nécessaire au niveau de l'arbre principal de sortie peut être déterminée par un moyen de calcul, cette puissance $Ws^*$ nécessaire étant répartie entre le premier groupe moteur et le second groupe moteur. De fait, cette puissance $Ws^*$ nécessaire est la somme de la seconde consigne $W_1^*$ de puissance à fournir par le second groupe moteur et d'une quatrième consigne $W_2^*$ de puissance, telle que $Ws^* = W_1^* + W_2^*$. Ce moyen de calcul peut être un élément de l'installation motrice selon l'invention. Ce moyen de calcul peut également être un élément extérieur à cette installation motrice et fournir par exemple une information de la puissance $Ws^*$ nécessaire au niveau de l'arbre principal de sortie.

Avantageusement, ce moyen de calcul peut comporter un moyen d'anticipation pour déterminer cette puissance $Ws^*$ nécessaire au niveau de l'arbre principal de sortie. Ainsi, la puissance $Ws^*$ nécessaire est déterminée en prenant en compte par anticipation des besoins en couple et/ou en puissance au niveau de l'arbre principal de sortie.

Le moyen d'anticipation détermine par exemple cette puissance $Ws^*$ nécessaire en prenant en compte la première consigne $NR^*$ de la fréquence de rotation $NR$ de l'arbre principal de sortie et la fréquence courante de rotation de cet arbre principal de sortie ainsi que l'accélération ou bien la décélération de l'arbre principal de sortie.

Dans le cas particulier d'une installation motrice équipant un aéronef à voilure tournante, le calcul de l'anticipation se fait selon les besoins de performance de l'aéronef notamment à partir d'informations relatives à l'état de vol et aux situations de vol de l'aéronef ainsi qu'en fonction des commandes de vol exécutées par un pilote de cet aéronef.

De plus, dans ce cas, le moyen de calcul ainsi que le troisième dispositif de régulation peuvent être intégrés directement à l'installation avionique de l'aéronef.

En outre, dans le cas particulier d'une phase de vol donnée de cet aéronef et comme la régulation de la fréquence de rotation $NR$ de l'arbre principal de sortie est assurée par le premier groupe moteur, la puissance

$Ws^*$ nécessaire au vol de l'aéronef est constante. Les second et troisième dispositifs de régulation de l'installation motrice selon l'invention permettent alors d'ajuster la répartition de cette puissance $Ws^*$ nécessaire entre chaque groupe moteur.

Le second dispositif de régulation et le troisième dispositif de régulation peuvent également réguler respectivement le second groupe moteur et le premier groupe moteur à l'aide d'un Indicateur de Première Limite (IPL). Cet instrument est notamment présent dans les aéronefs à voilure tournante. En outre, dans le cas où la première consigne $W_1^*$ est constante, l'utilisation de l'Indicateur de Première Limite peut se limiter aux moteurs principaux du premier groupe.

Dans un mode préféré de l'invention, le premier groupe moteur comporte deux moteurs principaux identiques alors que le second groupe moteur comporte un seul moteur secondaire, qui peut être différent des moteurs principaux. Le moteur secondaire peut être plus puissant ou bien moins puissant que les moteurs principaux.

Selon une première variante de l'invention, le troisième dispositif de régulation utilise la seconde consigne $W_1^*$ pour déterminer la troisième consigne $W_2f^*$. Ainsi, la seconde consigne $W_1^*$ est soustraite à la puissance $Ws^*$ nécessaire au niveau de l'arbre principal de sortie pour obtenir cette troisième consigne $W_2f^*$. De fait, cette troisième consigne $W_2f^*$ est égale à la quatrième consigne $W_2^*$ telle que $W_2f^* = W_2^*$ et, par suite, $W_2f^* = Ws^*-W_1^*$.

Selon une seconde variante de l'invention, le troisième dispositif de régulation utilise la puissance $W_1$ réellement fournie par le second groupe moteur pour déterminer la troisième consigne $W_2f^*$. Avantageusement, cette seconde variante permet de prendre en compte la puissance $W_1$ réellement fournie par le second groupe moteur, éventuellement réduite par l'intermédiaire du moyen de protection. Ainsi, la puissance $W_1$ réellement délivrée par le second groupe moteur est soustraite à la puissance $Ws^*$ nécessaire au niveau de l'arbre principal de sortie pour obtenir cette troisième consigne $W_2f^*$. Par suite, cette réduction de la puissance $W_1$ est prise en compte et compensée dans la troisième consigne $W_2f^*$. De fait, cette troisième consigne $W_2f^*$ peut être telle que $W_2f^* = Ws^* - W_1$ ou bien $W_2f^* = Ws^*-k.W_1^*$.

On peut également écrire $W_2f^* = W_2^*+W_1^*. (1 - k)$, la troisième consigne $W_2f^*$ étant égale à la quatrième consigne $W_2^*$ à laquelle est ajoutée la différence entre la seconde consigne $W_1^*$ de puissance et la puissance $W_1^*$ réellement fournie par le second groupe moteur. Ainsi, la puissance totale fournie par le premier groupe moteur et le second groupe moteur est bien égale à la puissance $Ws^*$ nécessaire au niveau de l'arbre principal de sortie.

De préférence, afin d'éviter d'injecter des perturbations en prenant en compte la puissance $W_1$ réellement délivrée par le second groupe moteur dans l'élaboration de $W_2f^*$, le second dispositif de régulation comporte au moins un moyen de filtrage. Chaque moyen de filtrage permet notamment de limiter, voire de supprimer des excitations engendrées par les fréquences de résonance d'une chaîne dynamique relative à la puissance fournie par chaque moteur secondaire du second groupe moteur. Chaque moyen de filtrage peut être un filtre passe bas pour supprimer les hautes fréquences. Chaque moyen de filtrage peut également être un filtre coupe fréquences pour supprimer uniquement certaines fréquences spécifiques, telles que des fréquences de 2 ou 3 Hertz (2 ou 3 Hz).

La troisième consigne $W_2f^*$ est alors telle que $W_2f^* = W_2^* + H.(W_1^* - W1)$ ou bien $W_2f^* = W_2^* + H.[W_1^*(1 - k)]$, $(W_1^* - W1)$ étant la réduction de la puissance $W_1$ à prendre en compte dans la troisième consigne $W_2f^*$ et $H.(W_1^* - W1)$ étant cette réduction filtrée par au moins un moyen de filtrage.

En outre, dans le mode préféré de l'invention, c'est-à-dire le premier groupe moteur comportant deux moteurs principaux identiques, cette troisième consigne $W_2f^*$ est répartie à parts égales entre chaque moteur principal. De fait, chaque moteur principal doit fournir une puissance $W_2f_{/mot}$ telle que

$$W_2f_{/mot} = \frac{W_2^* + H.(W1^* - W1)}{2}.$$

Le second groupe moteur est ainsi piloté uniquement en puissance, selon la seconde consigne $W_1^*$ élaborée par le second dispositif de régulation. De plus, le premier groupe moteur étant régulé afin de maîtriser la fréquence de rotation $NR$ de l'arbre principal de sortie, la puissance fournie par chaque groupe moteur peut avantageusement être optimisée sans dégrader les performances de l'installation motrice et en particulier en respectant la première consigne $NR^*$ de la fréquence de rotation $NR$ de l'arbre principal de sortie. La répartition de la puissance $Ws^*$ nécessaire entre les deux groupes moteurs, c'est-à-dire entre la seconde consigne $W_1^*$ et la quatrième consigne $W_2^*$ de puissance, peut alors être réalisée par l'intermédiaire du moyen de calcul selon les différents critères de fonctionnement de l'installation motrice que l'on souhaite optimiser.

Par exemple, la répartition de la puissance $Ws^*$ nécessaire peut être déterminée afin d'optimiser la consommation spécifique de chaque moteur de chaque groupe moteur. La consommation spécifique en carburant d'un moteur est la masse de carburant consommé divisée par la puissance fournie par ce moteur. Cette consommation spécifique permet notamment de quantifier le rendement énergétique de ce moteur par rapport à sa puissance.

Pour certains moteurs, lorsque la puissance fournie par ce type de moteur diminue, sa consommation spécifique peut augmenter. Il est alors intéressant de déterminer la répartition de la puissance $Ws^*$ nécessaire afin que les consommations spécifiques des moteurs principaux et secondaires de l'installation motrice soit optimum, c'est-à-dire que la consommation globale de carburant soit la plus faible possible sur une mission donnée.

Selon un autre exemple, la répartition de la puissance $Ws^*$ nécessaire peut être déterminée afin d'optimiser la maintenance de chaque moteur de chaque groupe moteur. En effet, tout moteur s'endommage lors de son utilisation et génère un temps et un coût de maintenance proportionnels à cet endommagement. L'endommagement d'un moteur croît généralement de manière exponentielle avec la puissance qu'il fournit, mais de façon spécifique à chaque moteur. Il est donc intéressant de limiter la puissance fournie par chaque moteur afin de limiter leur endommagement. De plus, il est possible de définir des lois de répartition de puissance permettant de prendre en compte les mode d'endommagement de chaque moteur et d'optimiser ainsi les temps et les coûts de maintenance de chaque groupe moteur.

Enfin, la répartition de la puissance $Ws^*$ nécessaire peut être déterminée afin d'optimiser les performances de chaque moteur de chaque groupe moteur en cas de panne d'au moins un des moteurs. Lorsqu'un moteur est en panne, le ou les autres moteurs restant opérationnels sont alors amenés à fonctionner selon un mode spécial désigné par l'acronyme $OEI$ pour la désignation en langue anglaise «One Engine Inoperative». Ce mode spécial permet à chaque moteur de développer des puissances plus importantes avec des contraintes de temps de fonctionnement.

Par contre, un temps plus ou moins long et spécifique à chaque moteur est requis pour atteindre la puissance maximale dans ce mode spécial $OEI,$ ce temps dépendant principalement de la puissance courante de ce moteur et de ses capacités d'accélération.

Pour optimiser la sécurité vis-à-vis d'une panne d'un moteur de l'installation motrice selon l'invention, il est alors intéressant de minimiser ce temps requis pour atteindre cette puissance maximale sur les moteurs restants. La répartition de la puissance $Ws^*$ nécessaire est alors déterminée afin de minimiser le temps requis de chaque moteur pour atteindre la puissance maximale en mode spécial $OEI.$

En outre, dans le cas où chaque moteur secondaire est un turbomoteur, la seconde consigne $W_1^*$ de puissance peut être transformée en une cinquième consigne $N_1^*$ de fréquence de rotation $N_1$ du générateur de gaz de chaque moteur secondaire. Un moyen de conversion permet de transformer cette seconde consigne $W_1^*$ de puissance en la cinquième consigne $N_1^*$. Ce moyen de conversion peut être intégré au moyen de calcul ou bien au second dispositif de régulation de l'installation motrice.

La présente invention a aussi pour objet un aéronef à voilure tournante comportant au moins un rotor principal, une installation motrice précédemment décrite et une installation avionique. L'installation motrice entraine en rotation le rotor principal qui est solidaire en rotation de l'arbre principal de sortie de la boite de transmission mécanique de puissance de l'installation motrice. De plus, l'aéronef peut comporter un rotor arrière ou bien au moins une hélice de propulsion. Ce rotor arrière ou bien chaque hélice de propulsion peut également être entrainé en rotation par cette boîte de transmission mécanique de puissance par l'intermédiaire d'un arbre secondaire de sortie.

En outre, le troisième dispositif de régulation ainsi que le moyen de calcul peuvent être situés dans l'installation avionique de l'aéronef.

De même, le second dispositif de régulation peut être situé dans l'installation avionique de l'aéronef.

La présente invention a aussi pour objet un procédé de régulation d'une installation motrice pour un aéronef à voilure tournante. Cette installation motrice comprend un premier groupe moteur, un second groupe moteur et une boîte de transmission mécanique de puissance, les deux groupes moteurs entrainant mécaniquement la boîte de transmission mécanique de puissance afin de mettre en rotation un arbre principal de sortie de cette boîte de transmission mécanique de puissance. Cet arbre principal de sortie a une fréquence de rotation $NR$ et est solidaire en rotation d'un rotor principal de l'aéronef.

Au cours de ce procédé,

- on détermine une puissance $Ws^*$ nécessaire au niveau de l'arbre principal de sortie et une première consigne $NR^*$ de la fréquence de rotation $NR$ de cet arbre principal de sortie,

- on détermine une seconde consigne $W_1^*$ de puissance pour le second groupe moteur,

- on régule le premier groupe moteur comprenant au moins un moteur principal selon la première consigne $NR^*$ de la fréquence de rotation $NR$,

- on régule la puissance fournie par le second groupe moteur comprenant au moins un moteur secondaire selon la seconde consigne $W_1^*$,

- on détermine une troisième consigne $W_2f^*$ d'anticipation de puissance pour le premier groupe moteur, et

- on régule le fonctionnement du premier groupe moteur selon cette troisième consigne $W_2f^*$ d'anticipation de puissance telle que le premier groupe moteur et le second groupe moteur fournissent conjointement la puissance nécessaire $Ws^*$.

Cette troisième consigne $W_2f^*$ ne permet pas de réguler directement la puissance fournie par le premier groupe moteur qui est prioritairement régulé par la première consigne $NR^*$. Par contre, cette troisième consigne $W_2f^*$ permet améliorer la réactivité de la régulation du premier groupe moteur en prenant en compte par anticipation le besoin de puissance de ce premier groupe.

En outre, on peut corriger la seconde consigne $W_1^*$ de puissance par un moyen de protection afin d'éviter une survitesse de l'arbre principal de sortie et/ou de chaque moteur secondaire.

De même, le second groupe moteur fournissant réellement une puissance $W_1$, on peut filtrer cette puissance $W_1$ par au moins un moyen de filtrage, ladite troisième consigne $W_2f^*$ étant alors telle que $W_2f^* = W_2^* + H. (W_1^* - W1)$, $(W_1^*-W1)$ étant une différence entre la puissance $W_1$ et la seconde consigne $W_1^*$ et $H. (W_1^* - W1)$ cette réduction filtrée par ledit moyen de filtrage.

L'invention et ses avantages apparaîtront avec plus de détails dans le cadre de la description qui suit avec des exemples de réalisations donnés à titre illustratif en référence aux figures annexées qui représentent :

- la figure 1, un aéronef à voilure tournante équipé d'une installation motrice selon l'invention,

- la figure 2, le mode de réalisation préféré d'une installation motrice selon l'invention,

- la figure 3, un autre mode de réalisation d'une installation motrice selon l'invention.

Les éléments présents dans plusieurs figures distinctes sont affectés d'une seule et même référence.

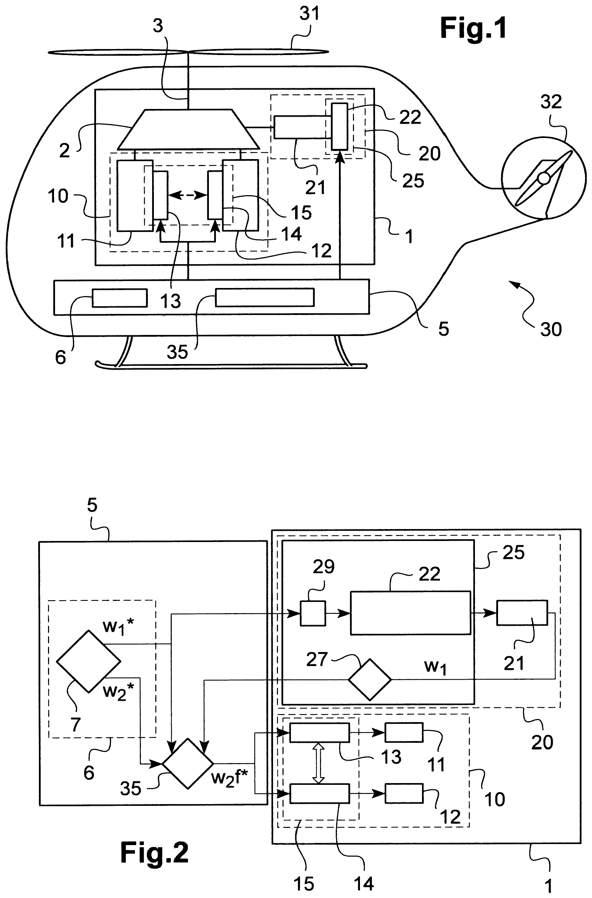

La figure 1 représente un aéronef 30 à voilure tournante comportant un rotor principal 31, un rotor arrière 32, une installation motrice 1 et une installation avionique 5. L'installation motrice 1 comporte un premier groupe moteur 10, un second groupe moteur 20 et une boîte de transmission mécanique de puissance 2. Les deux groupes moteurs 10,20 entraînent mécaniquement la boîte de transmission mécanique de puissance 2 afin de mettre en rotation un arbre principal de sortie 3 de cette boîte de transmission mécanique de puissance 2. Cet arbre principal de sortie 3 est solidaire en rotation avec le rotor principal 31 afin d'assurer la sustentation, voire la propulsion de l'aéronef 30.

Le rotor arrière 32 peut également être entrainé en rotation par la boite de transmission mécanique de puissance 2 par l'intermédiaire d'un arbre secondaire de sortie de cette boîte de transmission mécanique de puissance 2.

Le premier groupe moteur 10 comprend deux moteurs principaux 11,12 identiques et un premier dispositif de régulation 15. Ce premier dispositif de régulation 15 comporte deux calculateurs principaux 13,14, chaque calculateur principal 13,14 étant relié à un seul moteur principal 11,12 et les calculateurs principaux 13,14 sont également reliés entre eux.

Le second groupe moteur 20 comprend un moteur secondaire 21 et un second dispositif de régulation 25. Ce second dispositif de régulation 25 comporte un calculateur secondaire 22 relié au moteur secondaire 21.

Les moteurs principaux 11,12 ainsi que le moteur secondaire 21 sont des turbomoteurs comportant un générateur de gaz et une turbine libre entrainant la boîte de transmission mécanique de puissance 2.

L'installation avionique 5 comprend un troisième dispositif de régulation 35 ainsi qu'un moyen de calcul 6.

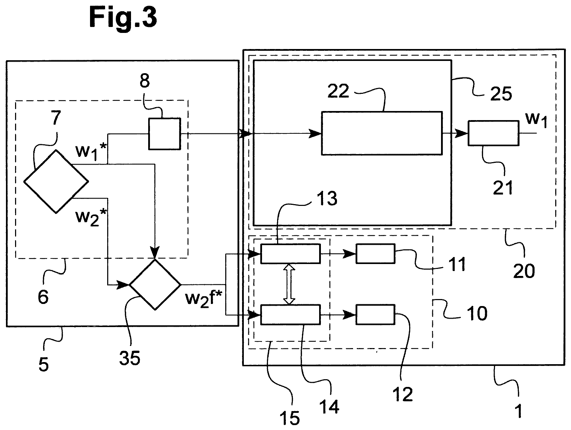

Les figures 2 et 3 représentent plus précisément l'installation motrice 1 selon deux modes de réalisation, la figure 2 représentant le mode préféré de réalisation de l'installation motrice 1 selon l'invention.

Le moyen de calcul 6 permet de déterminer la puissance $Ws^*$ nécessaire au niveau de l'arbre principal de sortie 3 et, par suite, du rotor principal 31. Dans ce but, le moyen de calcul 6 comporte un moyen d'anticipation 7 afin de déterminer cette puissance $Ws^*$ nécessaire au niveau de l'arbre principal de sortie 3 en prenant notamment en compte des besoins en couple et/ou en puissance au niveau de l'arbre principal de sortie 3 et du rotor principal 31 selon des commandes de vol exécutées par un pilote de cet aéronef 30.

Le premier dispositif de régulation 15 permet de réguler le fonctionnement des deux moteurs principaux 11,12 selon une première consigne $NR^*$ de la fréquence de rotation $NR$ de l'arbre principal de sortie 3 et du rotor principal 31.

Ce premier dispositif de régulation 15 assure par exemple la régulation des deux moteurs principaux 11,12 selon une boucle de régulation proportionnelle intégrale. Ces deux moteurs principaux 11,12 étant identiques, leur fonctionnement est alors symétrique, chaque moteur principal 11,12 contribuant à parts égales à l'entrainement du rotor principal 31 par l'intermédiaire de l'arbre principal de sortie 3.

Ainsi, le premier groupe moteur 10 permet, grâce au premier dispositif de régulation 15, de maitriser la fréquence de rotation $NR$ de l'arbre principal de sortie 3 et du rotor principal 31, cette fréquence de rotation $NR$ étant sensiblement égale à la première consigne $NR^*$.

Le second dispositif de régulation 25 permet de réguler la puissance fournie par le moteur secondaire 21 constituant le second groupe moteur 20 selon une seconde consigne $W_1^*$ de puissance à fournir par ce second groupe moteur 20.

Ce second dispositif de régulation 25 comporte un moyen de protection 29 contre une survitesse de l'arbre principal de sortie 3 et, par suite, du rotor principal 31 et contre une survitesse de ce moteur secondaire 21. Ce second dispositif de régulation 25 multiplie ainsi la seconde consigne $W_1^*$ un coefficient $k$, ce coefficient $k$ étant supérieur à zéro et inférieur ou égale à l'unité.

Lorsqu'aucune survitesse n'est détectée, le coefficient $k$ est alors égal à l'unité. Par contre, en cas de détection d'une telle survitesse, le coefficient $k$ est inférieur à l'unité et supérieur à zéro. Dans tous les cas, la puissance $W_1$ réellement fournie par le second groupe moteur 20 est alors sensiblement égale à la valeur $k.W_1^*$, mais peut tout de même varier légèrement autour de cette valeur $k.W_1^*$ au cours de la régulation, ce coefficient $k$ étant supérieur à zéro et inférieur ou égale à l'unité.

Le second dispositif de régulation 25 assure cette régulation du moteur secondaire 21 selon une boucle de régulation proportionnelle intégrale.

Le troisième dispositif de régulation 35 permet de réguler le fonctionnement des deux moteurs principaux 11,12 selon une troisième consigne $W_2f^*$ d'anticipation de puissance à fournir par ce premier groupe 10 moteur. Le premier groupe moteur 10 fournit alors une puissance $W_2$ sensiblement égale à cette troisième consigne $W_2f^*$, mais qui peut tout de même varier légèrement autour de cette troisième consigne $W_2f^*$ au cours de la régulation.

Cette troisième consigne $W_2f^*$ ne permet pas de réguler directement la puissance fournie par le premier groupe moteur 10, celui étant régulé par la première consigne $NR^*$. Par contre, cette troisième consigne $W_2f^*$ permet améliorer la réactivité de la régulation du premier groupe moteur en prenant en compte par anticipation le besoin de puissance de ce premier groupe moteur 10.

Cette troisième consigne $W_2f^*$ d'anticipation de puissance est telle que le premier groupe moteur 10 et le second groupe moteur 20 fournissent conjointement la puissance $Ws^*$ nécessaire au niveau de l'arbre principal de sortie 3.

La puissance $Ws^*$ nécessaire au niveau de l'arbre principal de sortie 3 et déterminée par le moyen de calcul 6 est répartie entre le premier groupe moteur 10 et le second groupe moteur 20. Cette puissance $Ws^*$ nécessaire est la somme de la seconde consigne $W_1^*$ de puissance et d'une quatrième consigne $W_2^*$ de puissance, telle que $Ws^* = W_1^* + W_2^*$.

Lorsqu'aucune survitesse n'est détectée par le moyen de protection 29, le coefficient $k$ est alors égal à l'unité. Par suite, la puissance $W_1$ réellement fournie par le second groupe moteur 20 est alors sensiblement égale à la seconde consigne $W_1^*$. En conséquence, la troisième consigne $W_2f^*$ est égale à la quatrième consigne $W_2^*$ telle que $W_2f^* = W_2^*$ et, par suite, $W_2f^* = Ws^*-W_1^*$.

Par contre, en cas de détection d'une telle survitesse, le coefficient $k$ est inférieur à l'unité et supérieur à zéro. Par suite, la puissance $W_1$ réellement fournie par le second groupe moteur 20 est alors sensiblement égale à la valeur $k.W_1^*$. En conséquence, la troisième consigne $W_2f^*$ est égale à la quatrième consigne $W_2^*$ à laquelle doit être ajoutée la différence entre la seconde consigne $W_1^*$ et la puissance $W_1$ réellement fournie telle que $W_2f^* = W_2^*+(W_1^* - W_1)$. On en déduit que la seconde consigne est $W_2f^* = Ws^* - W_1$, c'est-à-dire $W_2f^* = Ws^*-k.W_1^*$.

Ainsi, la puissance totale fournie par l'installation motrice 1 est bien égale à la puissance $Ws^*$ nécessaire au niveau de l'arbre principal de sortie 3 et du rotor principal 31.

De plus, le second dispositif de régulation 25 comporte un moyen de filtrage 26 afin d'éviter d'injecter des perturbations dans le troisième moyen de régulation 35. Ce moyen de filtrage 26 permet notamment de limiter, voire de supprimer des excitations engendrées par les fréquences de résonance d'une chaîne dynamique relative à la puissance $W_2^*$ fournie par le moteur secondaire 21. Ce moyen de filtrage 26 peut être un filtre passe bas ou bien un filtre coupe fréquences.

La troisième consigne $W_2f^*$ est alors telle que $W_2f^* = W_2^* + H. (W_1^* - W1)$ ou bien $W_2f^* = W_2^* + H. [W_1^*(1 - k)]$, $H.(W_1^* - W1)$ étant la différence entre la puissance $W_1$ et la seconde consigne $W_1^*$ filtrée par le moyen de filtrage 26.

En outre, les deux moteurs principaux 11,12 étant identiques, cette troisième consigne $W_2f^*$ est répartie à parts égales entre chaque moteur principal 11,12. De fait, chaque moteur principal 11,12 doit fournir une puissance $W_2f_{/mot}$ telle que

$$W_2f_{/mot} = \frac{W_2^* + H.(W1^* - W1)}{2}.$$

Par ailleurs, la répartition de la puissance $Ws^*$ nécessaire entre les deux groupes moteurs 10,20, c'est-à-dire entre la seconde consigne $W_1^*$ et la quatrième consigne $W_2^*$, peut être réalisée par l'intermédiaire du moyen de calcul 6 selon différents critères de fonctionnement de l'installation motrice 1.

Par exemple, la répartition de la puissance $Ws^*$ nécessaire peut être déterminée afin d'optimiser la consommation spécifique des deux moteurs principaux 11,12 et du moteur secondaire 21, c'est-à-dire de manière que la somme des consommations spécifiques des moteurs principaux 11,12 et secondaires 21 soit la plus faible possible.

Selon un autre exemple, la répartition de la puissance $Ws^*$ nécessaire peut être déterminée afin d'optimiser la maintenance de chaque moteur 11,12,21 de l'installation motrice 1.

Enfin, la répartition de la puissance $Ws^*$ nécessaire peut être déterminée afin d'optimiser les performances de chaque moteur 11,12,21 de l'installation motrice 1 en cas de panne d'au moins un des moteurs 11,12,21, par exemple en minimisant le temps nécessaire à chaque moteur 11,12,21 pour atteindre la puissance maximale en mode spéciale *OEI*.

La figure 3 représente un autre mode de réalisation de l'installation motrice 1 selon l'invention.

Selon ce mode de réalisation, le troisième dispositif de régulation 35 utilise la seconde consigne $W_1^*$ pour déterminer la troisième consigne $W_2f^*$. Ainsi, la seconde consigne $W_1^*$ est soustraite à la puissance $Ws^*$ nécessaire au niveau de l'arbre principal de sortie 3 pour obtenir cette troisième consigne $W_2f^*$. De fait, cette troisième consigne $W_2f^*$ est égale à la quatrième consigne $W_2^*$ telle que $W_2f^* = W_2^*$ et, par suite, $W_2f^* = Ws^* - W_1^*$.

Le moyen de calcul 6 comporte un moyen de conversion 8 afin de transformer la seconde consigne $W_1^*$ de puissance en une cinquième consigne $N_1^*$. Ainsi le second moyen de régulation 25 permet de réguler la fréquence de rotation $N_1$ du générateur de gaz du moteur secondaire 21 selon cette cinquième consigne $N_1^*$. Cette fréquence de rotation $N_1$ du générateur de gaz du moteur secondaire 21 est alors sensiblement égale à cette cinquième consigne $N_1^*$, mais peut tout de même varier légèrement autour de cette cinquième consigne $N_1^*$.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Installation motrice (1) comprenant deux groupes moteurs (10,20) et une boîte de transmission mécanique de puissance (2), les deux groupes moteurs (10,20) entrainant mécaniquement ladite boîte de transmission mécanique de puissance (2) afin de mettre en rotation au moins un arbre principal de sortie (3) de ladite boîte de transmission mécanique de puissance (2), ledit arbre principal de sortie (3) ayant une fréquence de rotation $NR$, **caractérisé en ce qu'**un premier groupe moteur (10) comprend au moins un moteur principal (11,12) et un premier dispositif de régulation (15), ledit premier dispositif de régulation (15) régulant le fonctionnement de chaque moteur principal (11,12) selon une première consigne $NR^*$ de ladite fréquence de rotation $NR$ dudit arbre principal de sortie (3) et qu'un second groupe moteur (20) comprend au moins un moteur secondaire (21) et un second dispositif de régulation (25), ledit second dispositif de régulation (25) régulant la puissance fournie par chaque moteur secondaire (21) selon une seconde consigne $W_1^*$ de puissance dudit second groupe moteur (20), ladite installation motrice (1) comprenant un troisième dispositif de régulation (35) régulant le fonctionnement dudit premier groupe moteur (10) selon une troisième consigne $W_2f^*$ d'anticipation de puissance telle que ledit premier groupe moteur (10) et ledit second groupe moteur (20) fournissent conjointement une puissance $Ws^*$ nécessaire au niveau dudit arbre principal de sortie (3), ladite puissance $Ws^*$ nécessaire étant déterminée par un moyen de calcul (6).

2. Installation motrice (1) selon la revendication 1, **caractérisée en ce que** ledit moyen de calcul (6) comporte un moyen d'anticipation (7), ladite puissance $Ws^*$ nécessaire étant déterminée par ledit moyen d'anticipation (7).

3. Installation motrice (1) selon l'une quelconque des revendications 1 à 2,
**caractérisée en ce que** ledit second dispositif de régulation (25) comporte un moyen de protection (29) contre une survitesse dudit arbre principal de sortie (3) et/ou de chaque moteur secondaire (21).

4. Installation motrice (1) selon l'une quelconque des revendications 1 à 3,
**caractérisée en ce que** ledit second dispositif de régulation (25) comporte au moins un moyen de filtrage (26).

5. Installation motrice (1) selon la revendication 4,
**caractérisé en ce que** ladite troisième consigne $W_2f^*$ d'anticipation de puissance est telle que $W_2f = W_2^* + H. (W_1^* - W1)$, $(W_1^* - W1)$ étant la différence entre une puissance $W_1$ réellement fournie par ledit second groupe moteur (20) et ladite seconde consigne $W_1^*$ et $H.(W_1^* - W1)$ étant cette différence filtrée par l'intermédiaire d'au moins un moyen de filtrage (26).

6. Installation motrice (1) selon l'une quelconque des revendications 1 à 5,
**caractérisée en ce que** ledit premier groupe moteur (10) comporte deux moteurs principaux (11,12) identiques.

7. Installation motrice (1) selon l'une quelconque des revendications 1 à 6,
**caractérisée en ce que** ladite seconde consigne $W_1^*$ de puissance est déterminée afin d'optimiser une consommation spécifique de chaque moteur (11,12,21) de chaque groupe moteur (10,20).

8. Installation motrice (1) selon l'une quelconque des revendications 1 à 6,
**caractérisée en ce que** ladite seconde consigne $W_1^*$ de puissance est déterminée afin d'optimiser la maintenance de chaque moteur (11,12,21) de chaque groupe moteur (10,20).

9. Installation motrice (1) selon l'une quelconque des revendications 1 à 6,
**caractérisée en ce que** ladite seconde consigne $W_1^*$ de puissance est déterminée afin d'optimiser les performances de chaque moteur (11,12,21) de chaque groupe moteur (10,20) en cas de panne d'au moins un desdits moteurs (11,12,21).

10. Installation motrice (1) selon l'une quelconque des revendications 1 à 9,
**caractérisée en ce que** ledit premier dispositif de régulation (15) comporte au moins un calculateur principal (13,14), chaque calculateur principal (13,14) étant relié à un seul moteur principal (11,12), et ledit second dispositif de régulation (25) comporte au moins un calculateur secondaire (22), chaque calculateur secondaire (22) étant relié à un seul moteur secondaire (21).

11. Installation motrice (1) selon l'une quelconque des revendications 1 à 10,
**caractérisée en ce que**, chaque moteur secondaire (21) étant un turbomoteur munie d'un générateur de gaz, ladite seconde consigne $W_1^*$ de puissance est transformée en une cinquième consigne $N1^*$ de fréquence de rotation du générateur de gaz, ledit second dispositif de régulation (25) comportant un moyen de conversion (8) transformant ladite seconde consigne $W_1^*$ de puissance en ladite cinquième consigne $N1^*$ de fréquence de rotation du générateur de gaz.

12. Aéronef (30) à voilure tournante comportant au moins un rotor principal (31), une installation motrice (1) et une installation avionique (5), ladite installation motrice (1) entraînant en rotation ledit rotor principal (31),
**caractérisé en ce que** ladite installation motrice (1) est selon l'une quelconque des revendications 1 à 11.

13. Aéronef (30) selon la revendication 12,
**caractérisé en ce que** ledit moyen de calcul (6), ledit second dispositif de régulation (25) et ledit troisième dispositif de régulation (35) sont situés dans ladite installation avionique (5).

14. Procédé de régulation d'une installation motrice (1) pour un aéronef à voilure tournante (30), ladite installation motrice (1) comprenant un premier groupe moteur (10), un second groupe moteur (20) et une boîte de transmission mécanique de puissance (2), les deux groupes moteurs (10,20) entraînant mécaniquement ladite boîte de transmission mécanique de puissance (2) afin de mettre en rotation un arbre principal de sortie (3) de ladite boîte de transmission mécanique de puissance (2), ledit arbre principal de sortie (3) ayant une fréquence de rotation $NR$ et étant solidaire en rotation d'un rotor principal (31) dudit aéronef (30),
au cours duquel,

- on détermine une puissance $Ws^*$ nécessaire au niveau dudit arbre principal de sortie (3) et une première consigne $NR^*$ de ladite fréquence de rotation $NR$ dudit arbre principal de sortie (3),
- on détermine une seconde consigne $W_1^*$ de puissance à fournir par ledit second groupe moteur (20),
- on régule ledit premier groupe moteur (10) comprenant au moins un moteur principal (11,12) selon ladite première consigne $NR^*$ de ladite fréquence de rotation $NR$,
- on régule la puissance fournie par ledit second groupe moteur (20) comprenant au moins un moteur secondaire (21) selon ladite seconde consigne $W_1^*$ de puissance,

- on détermine une troisième consigne $W_2f^*$ d'anticipation de puissance à fournir par ledit premier groupe moteur (10), et

- on régule le fonctionnement dudit premier groupe moteur (10) selon ladite troisième consigne $W_2f^*$ d'anticipation de puissance telle que ledit premier groupe moteur (10) et ledit second groupe moteur (20) fournissent conjointement ladite puissance $Ws^*$ nécessaire.

15. Procédé de régulation d'une installation motrice (1) selon la revendication 14, **caractérisé en ce que** l'on corrige ladite seconde consigne $W_1^*$ de puissance par un moyen de protection (29) pour éviter une survitesse dudit arbre principal de sortie (3) et/ou de chaque moteur secondaire (21).

16. Procédé de régulation d'une installation motrice (1) selon l'une quelconque des revendications 14 à 15, **caractérisé en ce que** l'on filtre une puissance $W_1$ réellement fournie par ledit second groupe moteur (20) par au moins un moyen de filtrage (26), ladite troisième consigne $W_2f^*$ d'anticipation de puissance étant telle que $W_2^*f = W_2^* + H.(W_1^* - W1)$, $(W_1^* - W1)$ étant la différence entre ladite puissance $W_1$ réellement fournie par ledit second groupe moteur (20) et ladite seconde consigne $W_1^*$ et $H.(W_1^*-W1)$ étant cette différence filtrée par au moins un moyen de filtrage (26).

**Patentansprüche**

1. Triebwerk (1) mit zwei Motorgruppen (10, 20) und einem mechanischen Leistungsgetriebe (2), bei dem die beiden Motorgruppen (10, 20) das mechanische Leistungsgetriebe (2) mechanisch antreiben, um mindestens eine Hauptabtriebswelle (3) des mechanischen Leistungsgetriebes (2) drehanzutreiben, wobei die Hauptabtriebswelle (3) eine Drehzahl NR aufweist, **dadurch gekennzeichnet, dass** eine erste Motorgruppe (10) mindestens einen Hauptmotor (11, 12) und eine erste Regelvorrichtung (15) umfasst, wobei die erste Regelvorrichtung (15) den Betrieb jedes Hauptmotors (11, 12) gemäß einem ersten Sollwert NR* der Drehzahl NR* der Hauptabtriebswelle (3) regelt, und dass eine zweite Motorgruppe (20) mindestens einen Nebenmotor (21) und eine zweite Regelvorrichtung (25) umfasst, wobei die zweite Regelvorrichtung (25) die von jedem Nebenmotor (21) gelieferte Leistung gemäß einem zweiten Sollwert W1* der Leistung der zweiten Motorgruppe (20) regelt, wobei das Triebwerk (1) eine dritte Regelvorrichtung (35) umfasst, die den Betrieb der ersten Motorgruppe (10) gemäß einem dritten Sollwert W2f* der antizipierten Leistung so regelt, dass die erste Motorgruppe (10) und die zweite Motorgruppe (20) gemeinsam eine erforderliche Leistung Ws* an der Hauptabtriebswelle (3) bereitstellen, wobei die erforderliche Leistung Ws* durch ein Rechenmittel (6) bestimmt ist.

2. Triebwerk (1) nach Anspruch 1, **dadurch gekennzeichnet, dass** das Rechenmittel (6) ein Antizipationsmittel (7) umfasst und die erforderliche Leistung Ws* durch das Antizipationsmittel (7) bestimmt wird.

3. Triebwerk (1) nach einem der Ansprüche 1 bis 2, **dadurch gekennzeichnet, dass** die zweite Regelvorrichtung (25) ein Mittel (29) zum Schutz vor Überdrehzahl der Hauptabtriebswelle (3) und/oder jedes Nebenmotors (21) umfasst.

4. Triebwerk (1) nach einem der Ansprüche 1 bis 3, **dadurch gekennzeichnet, dass** die zweite Regelvorrichtung (25) mindestens ein Filtermittel (26) umfasst.

5. Triebwerk (1) nach Anspruch 4, **dadurch gekennzeichnet, dass** der dritte Sollwert $W_2f^*$ der antizipierten Leistung so beschaffen ist, dass $W_2f = W_2^* + H.(W_1^* - W1)$, wobei $(W_1^* - W1)$ die Differenz zwischen einer tatsächlich von der zweiten Motorgruppe (20) gelieferten Leistung $W_1$ und dem zweiten Sollwert $W_1^*$ ist, und $H.(W_1^*-W1)$ diese Differenz, durch mindestens ein Filtermittel (26) gefiltert, ist.

6. Triebwerk (1) nach einem der Ansprüche 1 bis 5, **dadurch gekennzeichnet, dass** die erste Motorgruppe (10) zwei identische Hauptmotoren (11, 12) aufweist.

7. Triebwerk (1) nach einem der Ansprüche 1 bis 6, **dadurch gekennzeichnet, dass** der zweite Sollwert $W_1^*$ der Leistung bestimmt wird, um einen spezifischen Verbrauch jedes Motors (11, 12, 21) jeder Motorgruppe (10, 20) zu optimieren.

8. Triebwerk (1) nach einem der Ansprüche 1 bis 6, **dadurch gekennzeichnet, dass** der zweite Sollwert W1* der Leistung bestimmt wird, um die Wartung jedes Motors (11, 12, 21) jeder Motorgruppe (10, 20) zu optimieren.

9. Triebwerk (1) nach einem der Ansprüche 1 bis 6, **dadurch gekennzeichnet, dass** der zweite Sollwert $W_1^*$ der Leistung bestimmt wird, um die Leistung jedes Motors (11, 12, 21) jeder Motorgruppe (10, 20) im Falle eines Ausfalls von mindestens einem der Motoren (11, 12, 21) zu optimieren.

10. Triebwerk (1) nach einem der Ansprüche 1 bis 9, **dadurch gekennzeichnet, dass** die erste Regelvorrichtung (15) mindestens einen Hauptrechner (13, 14) umfasst, wobei jeder Hauptrechner (13, 14) mit einem einzelnen Hauptmotor (11, 12) verbunden ist, und die zweite Regelvorrichtung (25) mindestens einen Nebenrechner (22) umfasst, wobei jeder Nebenrechner (22) mit einem einzelnen Nebenmotor (21) verbunden ist.

11. Triebwerk (1) nach einem der Ansprüche 1 bis 10, **dadurch gekennzeichnet, dass** jeder Nebenmotor (21) ein Turbomotor ist, der mit einem Gasgenerator ausgestattet ist, wobei der zweite Sollwert W1* der Leistung in einen fünften Sollwert N1* der Gasgenerator-Drehzahl umgewandelt wird, wobei die zweite Regelvorrichtung (25) ein Umwandlungsmittel (8) umfasst, das den zweiten Sollwert W1* der Leistung in den fünften Sollwert N1* der Gasgenerator-Drehzahl wandelt.

12. Drehflügel-Luftfahrzeug (30) mit mindestens einem Hauptrotor (31), einem Triebwerk (1) und einer Avionikanlage (5), wobei das Triebwerk (1) den Hauptrotor (31) drehantreibt, **dadurch gekennzeichnet, dass** das Triebwerk (1) nach einem der Ansprüche 1 bis 11 ist.

13. Luftfahrzeug (30) nach Anspruch 12, **dadurch gekennzeichnet, dass** das Rechenmittel (6), die zweite Regelvorrichtung (25) und die dritte Regelvorrichtung (35) in der Avionikanlage (5) angeordnet sind.

14. Verfahren zum Regeln eines Triebwerks (1) für ein Drehflügel-Luftfahrzeug (30), wobei das Triebwerk (1) eine erste Motorgruppe (10), eine zweite Motorgruppe (20) und ein mechanisches Leistungsgetriebe (2) umfasst, beide Motorgruppen (10, 20) das mechanische Leistungsgetriebe (2) antreiben, um eine Hauptabtriebswelle (3) drehanzutreiben, wobei die Hauptabtriebswelle (3) eine Drehzahl NR aufweist und drehfest mit einem Hauptrotor (31) des Luftfahrzeugs (30) verbunden ist, in dessen Verlauf

- eine erforderliche Leistung Ws* an der Hauptabtriebswelle (3) und ein erster Sollwert NR* der Drehzahl NR der Hauptabtriebswelle (3) bestimmt werden,
- ein zweiter Sollwert W1* der von der zweiten Motorgruppe (20) bereitzustellenden Leistung bestimmt wird,
- die erste Motorgruppe (10), die mindestens einen Hauptmotor (11, 12) umfasst, gemäß dem ersten Sollwert NR* der Drehzahl NR geregelt wird,
- die von der mindestens einen Nebenmotor (21) aufweisenden zweiten Motorgruppe (20) gelieferte Leistung gemäß dem zweiten Leistungssollwert W1* geregelt wird ,
- ein dritter Sollwert für die von der ersten Motorgruppe (10) bereitzustellende antizipierte Leistung $W_2f^*$ bestimmt wird, und
- der Betrieb der ersten Motorgruppe (10) gemäß dem dritten Sollwert der antizipierten Leistung $W_2f^*$ so geregelt wird, dass die erste Motorgruppe (10) und die zweite Motorgruppe (20) gemeinsam die erforderliche Leistung Ws* liefern.

15. Verfahren zum Regeln eines Triebwerks (1) nach Anspruch 14, **dadurch gekennzeichnet, dass** der zweite Sollwert der Leistung $W_1^*$ durch ein Schutzmittel (29) korrigiert wird, um eine Überdrehzahl der Hauptabtriebswelle (3) und/oder jedes Sekundärmotors (21) zu vermeiden.

16. Verfahren zum Regeln eines Triebwerks (1) nach einem der Ansprüche 14 bis 15, **dadurch gekennzeichnet, dass** eine tatsächlich von der zweiten Motorgruppe (20) gelieferte Leistung W1 durch mindestens ein Filtermittel (26) gefiltert wird, wobei der dritte Sollwert $W_2f^*$ der antizipierten Leistung so beschaffen ist, dass $W_2f = W_2^* + H.(W_1^* - W1)$, wobei $(W_1^* - W1)$ die Differenz zwischen einer tatsächlich von der zweiten Motorgruppe (20) gelieferten Leistung $W_1$ und dem zweiten Sollwert $W_1^*$ ist, und $H.(W_1^*-W1)$ diese Differenz, durch mindestens ein Filtermittel (26) gefiltert, ist.

**Claims**

1. Power plant (1) comprising two engine groups (10, 20) and a mechanical power transmission (2), the two engine groups (10, 20) driving the mechanical power transmission (2) mechanically in order to rotate a main outlet shaft (3) of the mechanical power transmission (2), the main outlet shaft (3) having a frequency of rotation NR, **characterised in that** a first engine group (10) comprises at least one main engine (11, 12) and a first regulator device (15), the first regulator device (15) regulating operation of each main engine (11, 12) in application of a first setpoint *NR** for the frequency of rotation *NR* of the main outlet shaft (3), and **in that** a second engine group (20) comprises at least one secondary engine (21) and a second regulator device (25), the second regulator device (25) regulating power delivered by each secondary engine (21) in application of a second setpoint $W_1^*$ for the power to be delivered from the second engine group (20), the power plant (1) having a third regulator device (35) regulating operation of the first engine group (10) in application of a third setpoint $W_2f^*$ for anticipating power such that the first engine group (10) and the second engine group (20) together provide a necessary power $Ws^*$ at the main outlet shaft (3), the necessary power $Ws^*$ being determined by a calculation means (6).

2. Power plant (1) according to claim 1, **characterised in that** the calculation means (6) comprise an anticipation means (7), the necessary power $Ws^*$ being determined by the anticipation means (7).

3. Power plant (1) according to either of claims 1 or 2, **characterised in that** the second regulator device (25) comprises a means of protection (29) against overspeed of the main outlet shaft (3) and/or of each secondary engine (21).

4. Power plant (1) according to any one of claims 1 to 3, **characterised in that** the second regulator device (25) includes at least one filter means (26).

5. Power plant (1) according to claim 4, **characterised in that** the third setpoint $W_2f^*$ for anticipating power is such that $W_2f^*=W_2^*+H\cdot(W_1^*-W_1)$, $(W_1^*-W_1)$ being the difference between a power $W_1$, actually delivered by the second engine group (20) and the second setpoint $W_1^*$, and where $H\cdot(W_1^*-W_1)$ is this difference filtered by the at least one filter means (26).

6. Power plant (1) according to any one of claims 1 to 5, **characterised in that** the first engine group (10) comprises two identical main engines (11, 12).

7. Power plant (1) according to any one of claims 1 to 6, **characterised in that** the second setpoint $W_1^*$ for power is determined so as to optimise a specific consumption of each engine (11, 12, 21) of each of the engine groups (10, 20).

8. Power plant (1) according to any one of claims 1 to 6, **characterised in that** the second setpoint $W_1^*$ for power is determined in order to optimise the maintenance of each engine (11, 12, 21) of each of the engine groups (10, 20).

9. Power plant (1) according to any one of claims 1 to 6, **characterised in that** the second setpoint $W_1^*$ for power is determined so as to optimise performance of each engine (11, 12, 21) of each of the engine groups (10, 20) if at least one of the engines (11, 12, 21) fails.

10. Power plant (1) according to any one of claims 1 to 9, **characterised in that** the first regulator device (15) includes at least one main computer (13, 14), each main computer (13, 14) being connected to a single main engine (11, 12), and the second regulator device (25) includes at least one secondary computer (22), each secondary computer (22) being connected to a single secondary engine (21).

11. Power plant (1) according to any one of claims 1 to 10, **characterised in that** each secondary engine (21) is a turboshaft engine provided with a gas generator, and the second setpoint $W_1^*$ for power is transformed into a fifth setpoint $N_1^*$ for the frequency of rotation of the gas generator, the second regulator device (25) comprising a conversion means (8) for transforming the second setpoint $W_1^*$ for power into the fifth setpoint $N_1^*$ for frequency of rotation of the gas generator.

12. Rotary wing aircraft (30) comprising at least one main rotor (31), a power plant (1) and an avionics installation (5), the power plant (1) driving in rotation the main rotor (31), **characterised in that** the power plant (1) is in accordance with any one of claims 1 to 11.

13. Aircraft (30) according to claim 12, **characterised in that** the calculation means (6), the second regulator device (25) and the third regulator device (35) are incorporated in the avionics installation (5).

14. Method of regulating a power plant (1) for a rotary wing aircraft (30), the power plant (1) comprising a first engine group (10), a second engine group (20), and a mechanical power transmission (2), the two engine groups (10, 20) driving the mechanical power transmission (2) mechanically in order to rotate a main outlet shaft (3) of the mechanical power transmission (2), the main outlet shaft (3) having a frequency of rotation $NR$ and being constrained to rotate with a main rotor (31) of the aircraft, the method comprising the following steps:

- determining a necessary power $Ws^*$ at the main outlet shaft (3) and a first setpoint $NR^*$ for the frequency of rotation $NR$ of the main outlet shaft (3);
- determining a second setpoint $W_1^*$ for power to be delivered by the second engine group (20);
- regulating the first engine group (10) having at least one main engine (11, 12) in application of the first setpoint $NR^*$ for the frequency of rotation $NR$;
- regulating the power delivered by the second engine group (20) having at least one secondary engine (21) in application of the second setpoint $W_1^*$ for power;
- determining a third setpoint $W_2f^*$ for anticipating power to be delivered by the first engine group (10); and
- regulating the operation of the first engine group (10) in application of the third setpoint $W_2f^*$ for anticipated power such that the first engine group (10) and the second engine group (20) together deliver the necessary power $Ws^*$.

15. Method of regulating a power plant (1) according to claim 14, **characterised in that** the second setpoint $W_1^*$ for power is corrected by protection means (29) for preventing overspeed of the main outlet shaft (3) and/or of each secondary engine (21).

16. Method according to either one of claims 14 and 15, for regulating a power plant (1), **characterised in that** power $W_1$ actually delivered by the second engine group (20) is filtered by at least one filter means (26), the third setpoint $W_2f^*$ for anticipating power being such that $W_2f^*=W_2^*+H\cdot(W_1^*-W_1)$, $(W_1^*-W_1)$ being the difference between the power $W_1$ actually delivered by the second engine group (20) and the second setpoint $W_1^*$ and where $H\cdot(W_1^*-W_1)$ is this difference filtered by at least one filter means (26).

**Fig.1**

**Fig.2**

# Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4479619 A
- US 3963372 A
- US 20030135305 A
- US 3174551 A
- US 4522025 A
- WO 2012059671 A2
- FR 2974564